# EUROPÄISCHE PATENTSCHRIFT

(11) **EP 1 913 095 B1**
(45) Veröffentlichungstag und Bekanntmachung des Hinweises auf die Patenterteilung: **20.03.2013**
(21) Anmeldenummer: 06777783.9
(22) Anmeldetag: 14.07.2006
(51) Int. Cl.: C09B 67/20, C08K 5/00

(54) **FESTE PIGMENTZUBEREITUNGEN, ENTHALTEND WASSERLÖSLICHE OBERFLÄCHENAKTIVE ADDITIVE UND OXIDATIONSSCHUTZMITTEL**
SOLID PIGMENT PREPARATIONS CONTAINING WATER-SOLUBLE SURFACE-ACTIVE ADDITIVES AND ANTI-OXIDANTS
PREPARATIONS PIGMENTAIRES SOLIDES CONTENANT DES ADDITIFS TENSIOACTIFS SOLUBLES DANS L'EAU ET DES AGENTS ANTIOXYDANTS

(30) Priorität: 25.07.2005 DE 102005035253
(43) Veröffentlichungstag der Anmeldung: 23.04.2008
(73) Patentinhaber: BASF SE, 67056 Ludwigshafen (DE)
(72) Erfinder: REISACHER, Hansulrich, 67133 Maxdorf (DE); MAUTHE, Uwe, 68239 Mannheim (DE); WAGENBLAST, Gerhard, 67157 Wachenheim (DE)
(74) Vertreter: Ellwanger, Arndt
(86) Internationale Anmeldenummer: PCT/EP2006/064267
(87) Internationale Veröffentlichungsnummer: WO 2007/012575

(56) Entgegenhaltungen:
- EP-A- 0 289 142
- WO-A-92/17336
- WO-A-03/066743
- DE-A1- 19 843 730
- GB-A- 1 124 271
- US-A- 5 159 032
- DATABASE WPI Week 199248 Derwent Publications Ltd., London, GB; AN 1992-393982 XP002457181 & JP 04 292652 A (ASAHI DENKA KOGYO KK) 16. Oktober 1992 (1992-10-16)
- DATABASE WPI Week 200566 Derwent Publications Ltd., London, GB; AN 2005-642520 XP002457182 & JP 2005 226020 A (TORAY IND INC) 25. August 2005 (2005-08-25)
- DATABASE WPI Week 199624 Derwent Publications Ltd., London, GB; AN 1996-239473 XP002457183 & WO 96/13548 A (ASAHI KASEI KOGYO KK) 9. Mai 1996 (1996-05-09)

## Beschreibung

Die vorliegende Erfindung betrifft feste Pigmentzubereitungen, enthaltend als wesentliche Bestandteile
(A) 45 bis 90 Gew.-% mindestens einer farbgebenden Komponente, die
   (A1) 5 bis 100 Gew.-% mindestens eines Pigments und
   (A2) 0 bis 95 Gew.-% mindestens eines keine Eigenfarbe aufweisenden Füllstoffs enthält,
(B) 5 bis 50 Gew.-% mindestens eines wasserlöslichen oberflächenaktiven Additivs aus der Gruppe der alkylenoxidgruppenhaltigen Additive (B1) und der alkylenoxidgruppenfreien Additive (B2), wobei der Anteil des alkylenoxidgruppenhaltigen Additivs (B1) an den Pigmentzubereitungen mindestens 5 Gew.-% beträgt, und
(C) 0,1 bis 5 Gew.-% eines Oxidationsschutzmittels.

Weiterhin betrifft die Erfindung die Herstellung dieser Pigmentzubereitungen und ihre Verwendung zum Einfärben von hochmolekularen organischen und anorganischen Materialien sowie von Kunststoffen.

Feste Pigmentzubereitungen, die sich analog zu flüssigen Pigmentzubereitungen einfach durch Einrühren oder Schütteln in flüssigen Anwendungsmedien verteilen lassen, sog. "Stir-in"-Pigmentzubereitungen, sind zunehmend von Bedeutung.

In den WO-A-03/64540, 03/66743, 04/00903, 04/29159, 04/46251 und 04/50770 und den älteren deutschen Patentanmeldungen 102005005846.9 und 102005005975.9 werden Pigmentzubereitungen beschrieben, die nichtionische oberflächenaktive Additive auf Basis von Polyethern und/oder anionische wasserlösliche oberflächenaktive Additive auf Basis von sauren Estern dieser Polyether, von Polymerisaten von ethylenisch ungesättigten Carbonsäuren und/oder von Polyurethanen sowie auch Füllstoffe enthalten und sich durch dieses Stir-in-Verhalten auszeichnen.

Ein wesentlicher Schritt bei der Herstellung fester Pigmentzubereitungen ist die Trocknung der beim Feinverteilen des Pigments und dem Mischen aller Zubereitungsbestandteile anfallenden wäßrigen Suspensionen. Alkylenoxidgruppenhaltige oberflächenaktive Additive neigen jedoch insbesondere in Gegenwart von anorganischen Pigmenten auf Basis von Eisenoxiden bereits bei Trocknungstemperaturen > 80°C zur Zersetzung, die sich durch sprunghafte Temperaturerhöhungen des Trockenguts um bis zu 300°C bemerkbar macht und daher ein Sicherheitsrisiko darstellt.

Der Erfindung lag die Aufgabe zugrunde, diesem Problem abzuhelfen und feste Pigmentzubereitungen bereitzustellen, die sich nicht nur durch insgesamt vorteilhafte Anwendungseigenschaften auszeichnen, sondern auch verfahrenstechnisch sicher herstellen lassen.

Demgemäß wurden Pigmentzubereitungen gefunden, die als wesentliche Bestandteile
(A) 45 bis 90 Gew.-% mindestens einer farbgebenden Komponente, die
   (A1) 5 bis 100 Gew.-% mindestens eines Pigments und
   (A2) 0 bis 95 Gew.-% mindestens eines keine Eigenfarbe aufweisenden Füllstoffs enthält,
(B) 5 bis 50 Gew.-% mindestens eines wasserlöslichen oberflächenaktiven Additivs aus der Gruppe der alkylenoxidgruppenhaltigen Additive (B1) und der alkylenoxidgruppenfreien Additive (B2), wobei der Anteil des alkylenoxidgruppenhaltigen Additivs (B1) an den Pigmentzubereitungen mindestens 5 Gew.-% beträgt, und
(C) 0,1 bis 5 Gew.-% eines Oxidationsschutzmittels.

Außerdem wurde ein Verfahren zur Herstellung der Pigmentzubereitungen gefunden, das dadurch gekennzeichnet ist, daß man das Pigment (A1) zunächst in wäßriger, das Oxidationsschutzmittel (C) und zumindest einen Teil des Additivs (B) enthaltender Suspension einer Naßzerkleinerung unterwirft, gewünschtenfalls den Füllstoff (A2) vor oder nach der Naßzerkleinerung des Pigments (A1) der Suspension zusetzt und die Suspension dann, gegebenenfalls nach Zugabe der restlichen Menge Additiv (B), trocknet.

Weiterhin wurde ein Verfahren zur Einfärbung von hochmolekularen organischen und anorganischen Materialen gefunden, das dadurch gekennzeichnet ist, daß man die Pigmentzubereitungen durch Einrühren oder Schütteln in diese Materialien einträgt.

Schließlich wurde ein Verfahren zur Einfärbung von Kunststoffen gefunden, das dadurch gekennzeichnet ist, daß man diese Pigmentzubereitungen durch Extrudieren, Walzen, Kneten oder Mahlen in die Kunststoffe einarbeitet.

Die erfindungsgemäßen Pigmentzubereitungen enthalten als wesentliche Bestandteile eine farbgebende Komponente (A), ein wasserlösliches oberflächenaktives Additiv (B) und ein Oxidationsschutzmittel (C).

Die farbgebende Komponente (A) basiert auf mindestens einem Pigment (A1), das in Kombination mit mindestens einem keine Eigenfarbe aufweisenden Füllstoff (A2) vorliegen kann.

Als Pigment (A1) können in den erfindungsgemäßen Pigmentzubereitungen anorganische oder organische Pigmente enthalten sein. Selbstverständlich können die Pigmentzubereitungen auch Mischungen verschiedener anorganischer oder verschiedener organischer Pigmente oder Mischungen von anorganischen und organischen Pigmenten enthalten.

Die Pigmente liegen in feinteiliger Form vor. Die Pigmente haben dementsprechend üblicherweise mittlere Teilchengrößen von 0,1 bis 5 µm.

Als anorganische Pigmente können Bunt-, Schwarz- und Weißpigmente (Farbpigmente) sowie Glanzpigmente eingesetzt werden. Typische organische Pigmente sind Bunt- und Schwarzpigmente.

Beispiele für geeignete anorganische Pigmente sind:
- Weißpigmente: Titandioxid (C.I. Pigment White 6), Zihkweiß, Farbenzinkoxid; Zinksulfid, Lithopone;
- Schwarzpigmente: Eisenoxidschwarz (C.I. Pigment Black 11), Eisen-Mangan-Schwarz, Spinellschwarz (C.I. Pigment Black 27); Ruß (C.I. Pigment Black 7);
- Buntpigmente: Chromoxid, Chromoxidhydratgrün; Chromgrün (C.I. Pigment Green 48); Cobaltgrün (C.I. Pigment Green 50); Ultramaringrün; Kobaltblau (C.I. Pigment Blue 28 und 36; C.I. Pigment Blue 72); Ultramarinblau; Manganblau;
   Ultramarinviolett; Kobalt- und Manganviolett;
   Eisenoxidrot (C.I. Pigment Red 101); Cadmiumsulfoselenid (C.I. Pigment Red 108); Cersulfid (C.I. Pigment Red 265); Molybdatrot (C.I. Pigment Red 104); Ultramarinrot;
   Eisenoxidbraun (C.I. Pigment Brown 6 und 7), Mischbraun, Spinell- und Korundphasen (C.I. Pigment Brown 29, 31, 33, 34, 35, 37, 39 und 40), Chromtitangelb (C.I. Pigment Brown 24), Chromorange;
   Cersulfid (C.I. Pigment Orange 75);
   Eisenoxidgelb (C.I. Pigment Yellow 42); Nickeltitangelb (C.I. Pigment Yellow 53; C.I. Pigment Yellow 157, 158, 159, 160, 161, 162, 163, 164 und 189); Chromtitangelb; Spinellphasen (C.I. Pigment Yellow 119); Cadmiumsulfid und Cadmiumzinksulfid (C.I. Pigment Yellow 37 und 35); Chromgelb (C.I. Pigment Yellow 34); Bismutvanadat (C.I. Pigment Yellow 184).

Bei den Glanzpigmenten handelt es sich um einphasig oder mehrphasig aufgebaute plättchenförmige Pigmente, deren Farbenspiel durch das Zusammenspiel von Interferenz-, Reflexions- und Absorptionsphänomenen geprägt ist. Als Beispiele seien Aluminiumplättchen und ein- oder mehrfach, insbesondere mit Metalloxiden beschichtete Aluminium-, Eisenoxid- und Glimmerplättchen genannt.

Geeignete organische Pigmente sind z.B.:
- Monoazopigmente: C.I. Pigment Brown 25;
   C.I. Pigment Orange 5, 13, 36, 38, 64 und 67;
   C.I. Pigment Red 1, 2, 3, 4, 5, 8, 9, 12, 17, 22, 23, 31, 48:1, 48:2, 48:3, 48:4, 49, 49:1, 51:1, 52:1, 52:2, 53, 53:1, 53:3, 57:1, 58:2, 58:4, 63, 112, 146, 148, 170, 175, 184, 185, 187, 191:1, 208, 210, 245, 247 und 251;
   C.I. Pigment Yellow 1, 3, 62, 65, 73, 74, 97, 120, 151, 154, 168, 181, 183 und 191;
   C.I. Pigment Violet 32;
- Disazopigmente: C.I. Pigment Orange 16, 34, 44 und 72;
   C.I. Pigment Yellow 12, 13, 14, 16, 17, 81, 83, 106, 113, 126, 127, 155, 174, 176, 180 und 188;
- Disazokondensationspigmente: C.I. Pigment Yellow 93, 95 und 128;
   C.I. Pigment Red 144, 166, 214, 220, 221, 242 und 262;
   C.I. Pigment Brown 23 und 41;
- Anthanthronpigmente: C.I. Pigment Red 168;
- Anthrachinonpigmente: C.I. Pigment Yellow 147, 177 und 199;
   C.I. Pigment Violet 31;
- Anthrapyrimidinpigmente: C.I. Pigment Yellow 108;
- Chinacridonpigmente: C.I. Pigment Orange 48 und 49;
   C.I. Pigment Red 122, 202, 206 und 209;
   C.I. Pigment Violet 19;
- Chinophthalonpigmente: C.I. Pigment Yellow 138;
- Diketopyrrolopyrrolpigmente: C.I. Pigment Orange 71, 73 und 81;
   C.I. Pigment Red 254, 255, 264, 270 und 272;
- Dioxazinpigmente: C.I. Pigment Violet 23 und 37;
   C.I. Pigment Blue 80;
- Flavanthronpigmente: C.I. Pigment Yellow 24;
- Indanthronpigmente: C.I. Pigment Blue 60 und 64;
- Isoindolinpigmente: C.I. Pigmente Orange 61 und 69;
   C.I. Pigment Red 260;
   C.I. Pigment Yellow 139 und 185;
- Isoindolinonpigmente: C.I. Pigment Yellow 109, 110 und 173;
- Isoviolanthronpigmente: C.I. Pigment Violet 31;
- Metallkomplexpigmente: C.I. Pigment Red 257;
   C.I. Pigment Yellow 117, 129, 150, 153 und 177;
   C.I. Pigment Green 8;
- Perinonpigmente: C.I. Pigment Orange 43;
   C.I. Pigment Red 194;
- Perylenpigmente: C.I. Pigment Black 31 und 32;
   C.I. Pigment Red 123, 149, 178, 179, 190 und 224;
   C.I. Pigment Violet 29;
- Phthalocyaninpigmente: C.I. Pigment Blue 15, 15:1, 15:2,15:3, 15:4, 15:6 und 16;
   C.I. Pigment Green 7 und 36;
- Pyranthronpigmente: C.I. Pigment Orange 51;
   C.I. Pigment Red 216;
- Pyrazolochinazolonpigmente: C.I. Pigment Orange 67;
   C.I. Pigment Red 251;
- Thioindigopigmente: C.I. Pigment Red 88 und 181;
   C.I. Pigment Violet 38;
- Triarylcarboniumpigmente: C.I. Pigment Blue 1, 61 und 62;
   C.I. Pigment Green 1;
   C.I. Pigment Red 81, 81:1 und 169;
   C.I. Pigment Violet 1, 2, 3 und 27;
- C.I. Pigment Black 1 (Anilinschwarz);
- C.I. Pigment Yellow 101 (Aldazingelb);
- C.I. Pigment Brown 22.

Für die erfindungsgemäßen Pigmentzubereitungen sind als farbgebende Komponente (A1) anorganische Pigmente von besonderer Bedeutung. Unter diesen sind insbesondere die Pigmente auf Eisenoxidbasis, vor allem Eisenoxidschwarz (C.I. Pigment Black 11) sowie Eisenoxidrot (C.I. Pigment Red 101) und Eisenoxidgelb (C.I. Pigment Yellow 42), die beide in opaker oder transparenter Form verwendet werden können, zu nennen.

Die erfindungsgemäßen Pigmentzubereitungen können das Pigment (A1) in Kombination mit einem keine Eigenfarbe aufweisenden insbesondere anorganischen Füllstoff (A2) enthalten.

Diese farblosen oder weißen Füllstoffe (A2) weisen in der Regel einen Brechungsindex ≤ 1,7 auf. Beispielsweise beträgt der Brechungsindex von Kreide 1,55, von Baryt 1,64, von Kaolin 1,56, von Talk 1,57, von Glimmer 1,58 und von Silikaten 1,55.

Die Füllstoffe (A2) sind wie die Pigmente (A1) im Anwendungsmedium unlöslich und stammen insbesondere aus den folgenden chemischen Klassen, wobei sowohl Produkte natürlicher Herkunft als auch Produkte synthetischer Herkunft beispielhaft aufgeführt werden:
- Oxide und Hydroxide:
   natürlich: Aluminiumoxid und Magnesiumoxid;
   synthetisch: Aluminiumhydroxid und Magnesiumhydroxid;
- Siliciumdioxid und Silikate:
   natürlich: Quarz, Christobalit, Kieselgur, Talk, Kaolin, Kieselerde, Glimmer, Wolastonit und Feldspat;
   synthetisch: pyrogene Kieselsäure, Fällungskieselsäure, Alumosilikate und calcinierte Alumosilikate;
- Carbonate:
   natürlich: Calcium- und Magnesiumcarbonate, wie Calcit, Kreide, Dolomit und Magnesit;
   synthetisch: gefälltes Calciumcarbonat;
- Sulfate:
   natürlich: Barium- und Calciumsulfate, wie Baryt und Gips;
   synthetisch: gefälltes Bariumsulfat.

Die Füllstoffe (A2) können die unterschiedlichsten Teilchenformen aufweisen. Beispielsweise kann es sich um Kugeln, Würfel, Plättchen oder Fasern handeln. Füllstoffe auf natürlicher Basis haben üblicherweise Teilchengrößen im Bereich von etwa 1 bis 300 µm. So weisen Handelsprodukte auf Basis natürlicher Kreide z.B. einen d₅₀-Wert von in der Regel 1 bis 160 µm auf. Teilchengrößen unter 1 µm liegen in der Regel nur bei synthetisch insbesondere durch Fällverfahren hergestellten Füllstoffen vor.

Bevorzugte Füllstoffe (A2) sind Carbonate und Sulfate, wobei natürliche und gefällte Kreide sowie Bariumsulfat besonders bevorzugt sind. Diese Produkte sind im Handel z.B. unter den Namen Omyacarb^{®} und Omyalite^{®} (Fa. Omya) und Blanc fixe (Fa. Sachtleben) erhältlich.

Die farbgebende Komponente (A) der erfindungsgemäßen Pigmentzubereitungen enthält 5 bis 100 Gew.-% Pigment (A1) und 0 bis 95 Gew.-% Füllstoff (A2). Sind Füllstoffe (A2) Bestandteil der farbgebenden Komponente (A), so liegt ihr Mindestgehalt in der Regel bei 20 Gew.-%, bezogen auf die Komponente (A).

Als Komponente (B) enthalten die erfindungsgemäßen Pigmentzubereitungen mindestens ein alkylenoxidgruppenhaltiges wasserlösliches oberflächenaktives Additiv (B1) oder eine Kombination des Additivs (B1) mit einem weiteren wasserlöslichen Additiv (B2), das keine Alkylenoxidgruppen enthält. Der Gehalt der erfindungsgemäßen Pigmentzubereitungen an dem alkylenoxidgruppenhaltigen Additiv (B1) beträgt in beiden Fällen mindestens 5 Gew.-%.

Als Additive (B1) eignen sich insbesondere nichtionische Additive auf Basis von Polyethern (B11) sowie anionische Additive auf Basis von sauren Phosphorsäure-, Phosphonsäure-, Schwefelsäure- und/oder Sulfonsäureestern dieser Polyether (B12) und von Alkoxylierungsprodukten von Polymerisaten ethylenisch ungesättigter Carbonsäuren (B13). Bevorzugte Additive (B1) sind die Additive (B11) und (B13).

Als nichtionische Additive (B11) sind neben den ungemischten Polyalkylenoxiden, bevorzugt den C₂-C₄-Alkylenoxiden und phenylsubstituierten C₂-C₄-Alkylenoxiden, insbesondere Polyethylenoxiden, Polypropylenoxiden und Poly(phenylethylenoxiden), vor allem Blockcopolymerisate, insbesondere Polypropylenoxid- und Polyethylenoxidblöcke oder Poly(phenylethylenoxid)- und Polyethylenoxidblöcke aufweisende Polymerisate, und auch statistische Copolymerisate dieser Alkylenoxide geeignet.

Diese Polyalkylenoxide können durch Polyaddition der Alkylenoxide an Startermoleküle, wie an gesättigte oder ungesättigte aliphatische und aromatische Alkohole, gesättigte oder ungesättigte aliphatische und aromatische Amine, gesättigte oder ungesättigte aliphatische Carbonsäuren und Carbonsäureamide sowie aromatische Carbonsäureamide und Sulfonsäureamide, hergestellt werden. Die aromatischen Startermoleküle können dabei durch C₁-C₂₀-Alkyl oder C₇-C₃₀-Aralkyl substituiert sein. Üblicherweise werden 1 bis 300 mol, bevorzugt 3 bis 150 mol, Alkylenoxid je mol Startermolekül eingesetzt, im Fall aromatischer Startermoleküle liegen die Alkylenoxidmengen vor allem bei 2 bis 100 mol, vorzugsweise bei 5 bis 50 mol und insbesondere bei 10 bis 30 mol. Die Polyadditionsprodukte können eine terminale OH-Gruppe aufweisen oder endgruppenverschlossen sein, z.B. als C₁-C₆-Alkylether vorliegen.

Geeignete aliphatische Alkohole enthalten dabei in der Regel 6 bis 26 C-Atome, bevorzugt 8 bis 18 C-Atome, und können unverzweigt, verzweigt oder cyclisch aufgebaut sein. Als Beispiele seien Octanol, Nonanol, Decanol, Isodecanol, Undecanol, Dodecanol, 2-Butyloctanol, Tridecanol, Isotridecanol, Tetradecanol, Pentadecanol, Hexadecanol (Cetylalkohol), 2-Hexyldecanol, Heptadecanol, Octadecanol (Stearylalkohol), 2-Heptylundecanol, 2-Octyldecanol, 2-Nonyltridecanol, 2-Decyltetradecanol, Oleylalkohol und 9-Octadecenol sowie auch Mischungen dieser Alkohole, wie C₈/C₁₀-, C₁₃/C₁₅- und C₁₆/C₁₈-Alkohole, und Cyclopentanol und Cyclohexanol genannt. Von besonderem Interesse sind die gesättigten und ungesättigten Fettalkohole, die durch Fettspaltung und Reduktion aus natürlichen Rohstoffen gewonnen werden, und die synthetischen Fettalkohole aus der Oxosynthese. Die Alkylenoxidaddukte an diese Alkohole weisen üblicherweise mittlere Molekulargewichte Mₙ von 200 bis 5 000 auf.

Als Beispiele für die obengenannten aromatischen Alkohole seien neben unsubstituiertem Phenol und α- und β-Naphthol auch die alkylsubstituierten Produkte, die insbesondere durch C₁-C₁₂-Alkyl, vorzugsweise C₄-C₁₂- bzw. C₁-C₄-Alkyl substituiert sind, und die aralkylsubstituierten Produkte, insbesondere C₇-C₃₀-aralkylsubsitutiertes Phenol, wie Hexylphenol, Heptylphenol, Octylphenol, Nonylphenol, Isononylphenol, Undecylphenol, Dodecylphenol, Di- und Tributylphenol und Dinonylphenol, sowie Bisphenol A und seine Umsetzungprodukte mit Styrol, vor allem in den ortho-Positionen zu beiden OH-Gruppen durch insgesamt 4 Phenyl-1-ethylreste substituiertes Bisphenol A, genannt.

Geeignete aliphatische Amine entsprechen den oben aufgeführten aliphatischen Alkoholen. Besondere Bedeutung haben auch hier die gesättigten und ungesättigten Fettamine, die vorzugsweise 14 bis 20 C-Atome aufweisen. Als aromatische Amine seien beispielsweise Anilin und seine Derivate genannt.

Als aliphatische Carbonsäuren eignen sich insbesondere gesättigte und ungesättigte Fettsäuren, die bevorzugt 14 bis 20 C-Atome enthalten, und hydrierte, teilhydrierte und unhydrierte Harzsäuren sowie auch mehrwertige Carbonsäuren, z.B. Dicarbonsäuren, wie Maleinsäure.

Geeignete Carbonsäureamide leiten sich von diesen Carbonsäuren ab.

Neben den Alkylenoxidaddukten an die einwertigen Amine und Alkohole sind die Alkylenoxidaddukte an mindestens bifunktionelle Amine und Alkohole von besonderem Interesse.

Als mindestens bifunktionelle Amine sind zwei- bis fünfwertige Amine bevorzugt, die insbesondere der Formel H₂N-(R¹-NR²)ₙ-H (R¹: C₂-C₆-Alkylen; R²: Wasserstoff oder C₁-C₆-Alkyl; n: 1 bis 5) entsprechen. Im einzelnen seien beispielhaft genannt: Ethylendiamin, Diethylentriamin, Triethylentetramin, Tetraethylenpentamin, Propylendiamin-1,3, Dipropylentriamin, 3-Amino-1-ethylenaminopropan, Hexamethylendiamin, Dihexamethylentriamin, 1,6-Bis-(3-aminopropylamino)hexan und N-Methyldipropylentriamin, wobei Hexamethylendiamin und Diethylentriamin besonders bevorzugt sind und Ethylendiamin ganz besonders bevorzugt ist.

Vorzugsweise werden diese Amine zunächst mit Propylenoxid und anschließend mit Ethylenoxid umgesetzt. Der Gehalt der Blockcopolymerisate an Ethylenoxid liegt üblicherweise bei etwa 10 bis 90 Gew.-%.

Die Blockcopolymerisate auf Basis mehrwertiger Amine weisen in der Regel mittlere Molekulargewichte Mₙ von 1 000 bis 40 000, vorzugsweise 1 500 bis 30 000, auf.

Als mindestens bifunktionelle Alkohole sind zwei- bis fünfwertige Alkohole bevorzugt. Beispielsweise seien C₂-C₆-Alkylehglykole und die entsprechenden Di- und Polyalkylenglykole, wie Ethylenglykol, Propylenglykol-1,2 und -1,3, Butylenglykol-1,2 und -1,4, Hexylenglykol-1,6, Dipropylenglykol und Polyethylenglykol, Glycerin und Pentaerythrit genannt, wobei Ethylenglykol und Polyethylenglykol besonders bevorzugt und Propylenglykol und Dipropylenglykol ganz besonders bevorzugt sind.

Besonders bevorzugte Alkylenoxidaddukte an mindestens bifunktionelle Alkohole weisen einen zentralen Polypropylenoxidblock auf, gehen also von einem Propylenglykol oder Polypropylenglykol aus, das zunächst mit weiterem Propylenoxid und dann mit Ethylenoxid umgesetzt wird. Der Gehalt der Blockcopolymerisate an Ethylenoxid liegt üblicherweise bei 10 bis 90 Gew.-%.

Die Blockcopolymerisate auf Basis mehrwertiger Alkohole weisen im allgemeinen mittlere Molekulargewichte Mₙ von 1 000 bis 20 000, vorzugsweise 1 000 bis 15 000, auf.

Derartige Alkylenoxidblockcopolymerisate sind bekannt und im Handel z.B. unter den Namen Tetronic^{®}, Pluronic^{®} und Pluriol^{®} (BASF), Atlas^{®} (Uniquema), Emulgator WN und 386 (Lanxess) sowie Soprophor^{®} (Rhodia) erhältlich.

Die anionischen Additive (B12) basieren auf den Umsetzungsprodukten dieser Polyether (B11) mit Phosphorsäure, Phosphorpentoxid und Phosphonsäure bzw. Schwefelsäure und Sulfonsäure. Hierbei werden die Polyether in die entsprechenden Phosphorsäuremono- oder -diester und Phosphonsäureester bzw. die Schwefelsäuremonoester und Sulfonsäureester überführt. Diese sauren Ester liegen bevorzugt in Form wasserlöslicher Salze, insbesondere als Alkalimetallsalze, vor allem Natriumsalze, und Ammoniumsalze vor, sie können jedoch auch in Form der freien Säuren eingesetzt werden.

Bevorzugte Phosphate und Phosphonate leiten sich vor allem von alkoxylierten, insbesondere ethoxylierten, Fett- und Oxoalkoholen, Alkylphenolen, Fettaminen, Fettsäuren und Harzsäuren ab, bevorzugte Sulfate und Sulfonate basieren insbesondere auf alkoxylierten, vor allem ethoxylierten, Fettalkoholen, Alkylphenolen und Aminen, auch mehrwertigen Aminen, wie Hexamethylendiamin.

Derartige anionische oberflächenaktive Additive sind bekannt und im Handel z.B. unter den Namen Nekal^{®} (BASF), Tamol^{®} (BASF), Crodafos^{®} (Croda), Rhodafac^{®} (Rhodia), Maphos^{®} (BASF), Texapon^{®} (Cognis), Empicol^{®} (Albright & Wilson), Matexil^{®} (ICI), Soprophor^{®} (Rhodia) und Lutensit^{®} (BASF) erhältlich.

Bei den anionischen Additiven (B13) handelt es sich um die Alkoxylierungsprodukte von Polymerisaten ethylenisch ungesättigter Carbonsäuren.

Die Carbonsäurepolymerisate sind in nichtalkoxylierter Form auch als anionische wasserlösliche oberflächenaktive Additive (B21) geeignet. Die Additivklassen (B13) und (B21) werden daher im folgenden gemeinsam beschrieben.

Bei den als Basis für die Additive (B21) und (B13) dienenden Polymerisaten ungesättigter Carbonsäuren handelt es sich insbesondere um Homo- und Copolymerisate von ethylenisch ungesättigten Monocarbonsäuren und/oder ethylenisch ungesättigten Dicarbonsäuren, die keine Säurefunktion enthaltende Vinylmonomere zusätzlich einpolymerisiert enthalten können, und deren Salze.

Als Beispiele für die carboxylgruppenhaltigen Monomere und die Vinylmonomere seien genannt:
- Acrylsäure, Methacrylsäure und Crotonsäure;
- Maleinsäure, Maleinsäureanhydrid, Maleinsäuremonoester, Maleinsäuremonoamide, Umsetzungsprodukte von Maleinsäure mit Diaminen, die zu aminoxidgruppenhaltigen Derivaten oxidiert sein können, und Fumarsäure, wobei Maleinsäure, Maleinsäureanhydrid und Maleinsäuremonoamide bevorzugt sind;
- Vinylaromaten, wie Styrol, Methylstyrol und Vinyltoluol; Ethylen, Propylen, Isobuten, Diisobuten und Butadien; Vinylether, wie Polyethylenglykolmonovinylether; Vinylester linearer oder verzweigter Monocarbonsäuren, wie Vinylacetat und Vinylpropionat; Alkylester und Arylester ethylenisch ungesättigter Monocarbonsäuren, insbesondere Acrylsäure- und Methacrylsäureester, wie Methyl-, Ethyl-, Propyl-, Isopropyl-, Butyl-, Pentyl-, Hexyl-, 2-Ethylhexyl-, Nonyl-, Lauryl- und Hydroxyethyl-(meth)acrylat sowie Phenyl-, Naphthyl- und Benzyl(meth)acrylat; Dialkylester von ethylenisch ungesättigten Dicarbonsäuren, wie Dimethyl-, Diethyl-, Dipropyl-, Diisopropyl-, Dibutyl-, Dipentyl-, Dihexyl-, Di-2-ethylhexyl-, Dinonyl-, Dilauryl- und Di-2-hydroxyethylmaleinat und -fumarat; Vinylpyrrolidon; Acrylnitril und Methacrylnitril, wobei Styrol, Isobuten, Diisobuten, Acrylsäureester und Polyethylenglykolmonovinylether bevorzugt sind.

Als Beispiele für bevorzugte Homopolymerisate dieser Monomere sind insbesondere Polyacrylsäuren zu nennen.

Die Copolymerisate der genannten Monomere können aus zwei oder mehreren, insbesondere drei verschiedenen Monomeren aufgebaut sein. Es können statistische Copolymerisate, alternierende Copolymerisate, Blockcopolymerisate und Pfropfcopolymerisate vorliegen. Als bevorzugte Copolymerisate seien Styrol/Acrylsäure-, Acrylsäure/- Maleinsäure-, Acrylsäure/Methacrylsäure-, Butadien/Acrylsäure-, Isobuten/Maleinsäure-, Diisobuten/Maleinsäure- und Styrol/Maleinsäure-Copolymerisate, die jeweils als zusätzliche Monomerbestandteile Acrylsäureester und/oder Maleinsäureester enthalten können, genannt.

Vorzugsweise liegen die Carboxylgruppen der nicht alkoxylierten Homo- und Copolymerisate zumindest teilweise in Salzform vor, um Wasserlöslichkeit zu gewährleisten. Geeignet sind beispielsweise die Alkalimetallsalze, wie Natrium- und Kaliumsalze, und die Ammoniumsalze.

Üblicherweise weisen die nicht alkoxylierten polymeren Additive (B21) mittlere Molekulargewichte M_{w} von 900 bis 250 000 auf. Die für die einzelnen Polymerisate besonders geeigneten Molekulargewichtsbereiche hängen naturgemäß von deren Zusammensetzung ab. Im folgenden werden für verschiedene Polymerisate beispielhaft Molekulargewichtsangaben gemacht: Polyacrylsäuren: M_{w} von 900 bis 250 000; Styrol/Acrylsäure-Copolymerisate: M_{w} von 1 000 bis 50 000; Acrylsäure/Methacrylsäure-Copolymerisate: M_{w} von 1 000 bis 250 000; Acrylsäure/Maleinsäure-Copolymerisate: M_{w} von 2 000 bis 70 000.

Die Alkoxylierungsprodukte (B13) dieser Homo- und Copolymerisate entstehen durch teilweise bis (soweit dies möglich ist) vollständige Veresterung mit Polyetheralkoholen. In der Regel liegt der Veresterungsgrad bei 30 bis 80 mol-%.

Für die Veresterung geeignet sind insbesondere die Polyetheralkohole selbst, vorzugsweise Polyethylenglykole und Polypropylenglykole, sowie deren einseitig endgruppenverschlossene Derivate, vor allem die entsprechenden Monoether, wie Monoarylether, z.B. Monophenylether, und insbesondere Mono-C₁-C₂₆-alkylether, z.B. mit Fettalkoholen veretherte Ethylen- und Propylenglykole, und die Polyetheramine, die z.B. durch Umwandlung einer terminalen OH-Gruppe der entsprechenden Polyetheralkohole oder durch Polyaddition von Alkylenoxiden an vorzugsweise primäre aliphatische Amine herstellbar sind. Bevorzugt sind dabei Polyethylenglykole, Polyethylenglykolmonoether und Polyetheramine. Die mittleren Molekulargewichte Mₙ der verwendeten Polyetheralkohole und ihrer Derivate liegen üblicherweise bei 200 bis 10 000.

Durch Steuerung des Verhältnisses von polaren zu unpolaren Gruppen können die oberflächenaktiven Eigenschaften der Additive (B13) bzw. (B21) gezielt eingestellt werden.

Die anionischen oberflächenaktiven Additive (B13) bzw. (B21) sind ebenfalls bekannt und im Handel z.B. unter den Namen Sokalan^{®} (BASF), Joncryl^{®} (Johnson Polymer), Alcosperse^{®} (Alco), Geropon^{®} (Rhodia), Good-Rite^{®} (Goodrich), Neoresin^{®} (Avecia), Orotan^{®} und Morez^{®} (Rohm & Haas), Disperbyk^{®} (Byk) sowie Tegospers^{®} (Goldschmidt) erhältlich.

Neben den als Additiv (B2) bevorzugten nichtalkoxylierten Carbonsäurepolymerisaten (B21) sind anionische Additive auf der Basis von Polyurethanen (B22) als wasserlösliche oberflächenaktive Additive (B2) geeignet.

Unter dem Begriff Polyurethan sollen dabei erfindungsgemäß nicht nur die reinen Umsetzungsprodukte von mehrwertigen Isocyanaten (B22a) mit isocyanatreaktive Hydroxygruppen enthaltenden organischen Verbindungen (B22b), sondern auch solche Umsetzungsprodukte, die durch den Zusatz von weiteren isocyanatreaktiven Verbindungen, z.B. von primäre öder sekundäre Aminogruppen tragenden Carbonsäuren, zusätzlich funktionalisiert sind, verstanden werden.

Diese Additive zeichnen sich gegenüber anderen oberflächenaktiven Additiven durch ihre geringe lonenleitfähigkeit und ihren neutralen pH-Wert aus.

Als mehrwertige Isocyanate (B22a) für die Herstellung der Additive (B22) eignen sich insbesondere Diisocyanate, es können aber auch Verbindungen mit drei oder vier Isocyanatgruppen eingesetzt werden. Es können sowohl aromatische als auch aliphatische Isocyanate verwendet werden.

Als Beispiele für bevorzugte Di- und Triisocyanate seien aufgeführt: 2,4-Toluylendiisocyanat (2,4-TDI), 4,4'-Diphenylmethandiisocyanat (4,4'-MDI), para-Xylylendiisocyanat, 1,4-Diisocyanatobenzol, Tetramethylxylylendiisocyanat (TMXDI), 2,4'-Diphenylmethandiisocyanat (2,4'-MDI) und Triisocyanatotoluol sowie Isophorondiisocyanat (IPDI), 2-Butyl-2-ethylpentamethylendiisocyanat, Tetramethylendiisocyanat, Hexamethylendiisocyanat, Dodecamethylendiisocyanat, 2,2-Bis(4-isocyanatocyclohexyl)propan, Trimethylhexandiisocyanat, 2-Isocyanatopropylcyclohexylisocyanat, 2,4,4- und 2,2,4-Trimethylhexamethylendiisocyanat, 2,4'-Methylenbis(cyclohexyl)diisocyanat, cis-Cyclohexan-1,4-diisocyanat, trans-Cyclohexan-1,4-diisocyanat und 4-Methylcyclohexan-1,3-diisocyanat (H-TDI).

Selbstverständlich können auch Mischungen von Isocyanaten (B22a) verwendet werden. Beispielhaft seien hier genannt: Mischungen von Strukturisomeren von 2,4-Toluylendiisocyanat und Triisocyanatotoluol, z.B. Mischungen aus 80 mol-% 2,4-Toluylendiisocyanat und 20 mol-% 2,6-Toluylendiisocyanat; Mischungen aus cis- und trans-Cyclohexan-1,4-diisocyanat; Mischungen von 2,4- oder 2,6-Toluylendiisocyanat mit aliphatischen Diisocyanaten, wie Hexamethylendiisocyanat und Isophorondiisocyanat.

Als isocyanatreaktive organische Verbindungen (B22b) eignen sich bevorzugt Verbindungen mit mindestens zwei isocyanatreaktiven Hydroxygruppen pro Molekül. Geeignet als Verbindung (B22b) sind jedoch auch Verbindungen, die nur eine isocyanatreaktive Hydroxygruppe pro Molekül aufweisen. Diese monofunktionalisierten Verbindungen können die mindestens zwei isocyanatreaktive Hydroxygruppen pro Molekül enthaltenden Verbindungen bei der Umsetzung mit dem Polyisocyanat (B22a) teilweise oder auch ganz ersetzen.

Im folgenden werden Beispiele für besonders bevorzugte isocyanatreaktive Verbindungen (B22b) mit mindestens zwei isocyanatreaktiven Hydroxygruppen pro Molekül aufgeführt.

Dabei handelt es sich um Polyetherdiole, Polyesterdiole, Polyesterdiole auf Lactonbasis, Diole und Triole mit bis zu 12 C-Atomen, Dihydroxycarbonsäuren, Dihydroxysulfonsäuren, Dihydroxyphosphonsäuren, Polycarbonatdiole, Polyhydroxyolefine und Polysiloxane mit im Mittel mindestens zwei Hydroxygruppen pro Molekül.

Geeignete Polyetherdiole (B22b) sind beispielsweise Homo- und Copolymerisate von C₂-C₄-Alkylenoxiden, wie Ethylenoxid, Propylenoxid und Butylenoxid, Tetrahydrofuran, Styroloxid und/oder Epichlorhydrin, die in Gegenwart eines geeigneten Katalysators, z.B. Bortrifluorid, erhältlich sind. Weiterhin geeignete Polyetherdiole sind durch (Co)Polymerisation dieser Verbindungen in Gegenwart eines Starters mit mindestens zwei aciden Wasserstoffatomen, z.B. von Wasser, Ethylenglykol, Thioglykol, Mercaptoethanol, 1,3-Propandiol, 1,4-Butandiol, 1,6-Hexandiol, 1,12-Dodecandiol, Ethylendiamin, Anilin oder 1,2-Di-(4-Hydroxyphenyl)propan, zu erhalten.

Beispiele für besonders geeignete Polyetherdiole (B22b) sind Polyethylenglykol, Polypropylenglykol, Polybutylenglykol und Polytetrahydrofuran sowie Copolymerisate davon.

Das Molekulargewicht Mₙ der Polyetherdiole beträgt bevorzugt 250 bis 5 000, besonders bevorzugt 500 bis 2 500.

Als isocyanatreaktive Verbindung (B22b) geeignete Polyesterdiole (Hydroxypolyester) sind allgemein bekannt.

Bevorzugte Polyesterdiole (B22b) sind die Umsetzungsprodukte von Diolen mit Dicarbonsäuren oder deren reaktiven Derivaten, z.B. Anhydriden oder Dimethylestern.

Als Dicarbonsäuren eignen sich gesättigte und ungesättigte aliphatische sowie aromatische Dicarbonsäuren, die zusätzliche Substituenten, wie Halogen, tragen können. Bevorzugte aliphatische Dicarbonsäuren sind gesättigte unverzweigte α,ω-Dicarbonsäuren, die 3 bis 22, vor allem 4 bis 12 C-Atome enthalten.

Beispiele für besonders geeignete Dicarbonsäuren sind: Bernsteinsäure, Glutarsäure, Adipinsäure, Korksäure, Azelainsäure, Sebacinsäure, 1,12-Dodecandicarbonsäure, Maleinsäure, Maleinsäureanhydrid, Fumarsäure, Itaconsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Terephthalsäure, Terephthalsäuredimethylester und Isophthalsäuredimethylester.

Als Diole eignen sich insbesondere gesättigte und ungesättigte aliphatische und cycloaliphatische Diole. Die besonders bevorzugten aliphatischen α,ω-Diole sind unverzweigt und weisen 2 bis 12, insbesondere 2 bis 8, vor allem 2 bis 4 C-Atome auf. Bevorzugte cycloaliphatische Diole leiten sich von Cyclohexan ab.

Beispiele für besonders geeignete Diole sind: Ethylenglykol, Propylenglykol, 1,3-Propandiol, 1,4-Butandiol; 2-Methylpropan-1,3-diol, 1,5-Pentandiol, Neopentylglykol, 1,6-Hexandiol, 1,8-Octandiol, 1,10-Decandiol, 1,12-Dodecandiol, cis- und trans-But-2-en-1,4-diol, 2-Butin-1,4-diol und cis- und trans-1,4-Di(hydroxymethyl)cyclohexan.

Das Molekulargewicht Mₙ der Polyesterdiole liegt bevorzugt bei 300 bis 5 000.

Als isocyanatreaktive Verbindung (B22b) geeignete Polyesterdiole auf Lactonbasis basieren insbesondere auf aliphatischen gesättigten unverzweigten ω-Hydroxycarbonsäuren mit 4 bis 22, bevorzugt 4 bis 8 C-Atomen. Es eignen sich auch verzweigte ω-Hydroxycarbonsäuren, bei denen ein oder mehrere -CH₂-Gruppen in der Alkylenkette durch -CH(C₁-C₄-Alkyl)- ersetzt sind.

Beispiele für bevorzugte ω-Hydroxycarbonsäuren sind γ-Hydroxybuttersäure und δ-Hydroxyvaleriansäure.

Selbstverständlich eignen sich auch die oben genannten Diole als isocyanatreaktive Verbindungen (B22b), wobei dieselben Bevorzugungen wie oben gelten.

Ebenfalls als isocyanatreaktive Verbindungen (B22b) geeignet sind Triole, die insbesondere 3 bis 12, vor allem 3 bis 8 C-Atome aufweisen. Beispiel für ein besonders geeignetes Triol ist Trimethylolpropan.

Als isocyanatreaktive Verbindungen (B22b) geeignete Dihydroxycarbonsäuren sind insbesondere aliphatische gesättigte Dihydroxycarbonsäuren, die vorzugsweise 4 bis 14 C-Atome enthalten, besonders geeignet. Ganz besonders geeignet sind Dihydroxycarbonsäuren der Formel 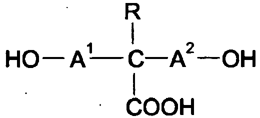 in A¹ und A² gleiche oder verschiedene C₁-C₄-Alkylenreste bedeuten und R für Wasserstoff oder C₁-C₄-Alkyl steht.

Besonders bevorzugtes Beispiel für diese Dihydroxycarbonsäuren ist Dimethylolpropionsäure (DMPA).

Weiterhin eignen sich als isocyanatreaktive Verbindungen (B22b) die entsprechenden Dihydroxysulfonsäuren und Dihydroxyphosphonsäuren, wie 2,3-Dihydroxypropanphosphonsäure.

Der Begriff Dihydroxycarbonsäure soll dabei auch Verbindungen umfassen, die mehr als eine Carboxylfunktion (bzw. Anhydrid- oder Esterfunktion) enthalten. Solche Verbindungen sind durch Umsetzung von Dihydroxyverbindungen mit Tetracarbonsäuredianhydriden, wie Pyromellitsäuredianhydrid oder Cyclopentantetracarbonsäuredianhydrid, im Molverhältnis 2 : 1 bis 1,05 : 1 in einer Polyadditionsreaktion erhältlich und weisen vorzugsweise ein mittleres Molekulargewicht Mₙ von 500 bis 10 000 auf.

Als Beispiele für geeignete Polycarbonatdiole (B22b) sind die Umsetzungsprodukte von Phosgen mit einem Überschuß an Diolen, insbesondere unverzweigten gesättigten aliphatischen α,ω-Diolen mit 2 bis 12, insbesondere 2 bis 8, vor allem 2 bis 4 C-Atomen zu nennen.

Als isocyanatreaktive Verbindung (B22b) geeignete Polyhydroxyolefine sind vor allem α,ωDihydroxyolefine, wobei α,ω-Dihydroxybutadiene bevorzugt sind.

Die weiterhin als isocyanatreaktive Verbindung (B22b) geeigneten Polysiloxane enthalten im Mittel mindestens zwei Hydroxygruppen pro Molekül. Besonders geeignete Polysiloxane weisen im Mittel 5 bis 200 Si-Atome (Zahlenmittel) auf und sind vor allem mit C₁-C₁₂-Alkylgruppen, insbesondere Methylgruppen, substituiert.

Als Beispiele für isocyanatreaktive Verbindungen (B22b), die nur eine isocyanatreaktive Hydroxygruppe aufweisen, seien insbesondere aliphatische, cycloaliphatische, araliphatische oder aromatische Monohydroxycarbonsäuren und -sulfonsäuren genannt.

Die Additive auf Polyurethanbasis (B22) werden durch Umsetzung der Verbindungen (B22a) und (B22b) hergestellt, wobei das Molverhältnis von (B22a) zu (B22b) in der Regel 2 : 1 bis 1 : 1, vorzugsweise 1,2 : 1 bis 1 : 1,2, beträgt.

Dabei ist es möglich, neben den vorstehend genannten isocyanatreaktiven Verbindungen (B22b) weitere Verbindungen mit isocyanatreaktiven Gruppen zuzusetzen, beispielsweise Dithiole, Thioalkohole, wie Thioethanol, Aminoalkohole, wie Ethanolamin und N-Methylethanolamin, oder Diamine, wie Ethylendiamin, und dadurch Polyurethane herzustellen, die neben den Urethangruppen noch Isocyanuratgruppen, Allophanatgruppen, Harnstoffgruppen, Biuretgruppen, Uretdiongruppen oder Carbodiimidgruppen tragen. Weitere Beispiele für solche isocyanatreaktiven Verbindungen sind aliphatsche, cycloaliphatische, araliphatische oder aromatische Carbonsäuren und Sulfonsäuren, die mindestens zwei primäre und/oder sekundäre Aminogruppen tragen.

Selbstverständlich können auch entsprechende nur eine isocyanatreaktive Gruppe aufweisende Verbindungen, beispielsweise Monoalkohole, primäre und sekundäre Monoamine, Monoaminocarbon- und -sulfonsäuren und Mercaptane, zugesetzt werden. Übliche Einsatzmengen liegen bei bis zu 10 mol-%, bezogen auf (B22a). Vorzugsweise liegen die Carboxylgruppen der Umsetzungsprodukte (B22) zumindest teilweise in Salzform vor, um Wasserlöslichkeit zu gewährleisten. Geeignet sind beispielsweise Alkalimetallsalze, wie Natrium- und Kaliumsalze, und Ammoniumsalze.

Üblicherweise weisen die Additive (B22) mittlere Molekulargewichte M_{w} von 500 bis 250 000 auf.

Durch Steuerung des Verhältnisses von polaren zu unpolaren Gruppen können die oberflächenaktiven Eigenschaften der Additive (B22) gezielt eingestellt werden.

Derartige anionische oberflächenaktive Additive (B22) sind bekannt und im Handel z.B. unter den Namen Borchi^{®} GEN SN95 (Borchers) erhältlich.

Selbstverständlich können Mischungen mehrerer Additive (B1) und auch Mischungen mehrerer Additive (B2) verwendet werden.

Als Komponente (C) enthalten die erfndungsgemäßen Pigmentzubereitungen ein Oxidationsschutzmittel.

Durch die Anwesenheit der Oxidationsschutzmittel (C) können die erfindungsgemäßen Pigmentzubereitungen für den Trocknungsschritt stabilisiert werden, so daß sie bei verfahrenstechnisch sinnvollen Temperaturen von ≥ 70°C getrocknet werden können, ohne das Risiko einer Selbstentzündung einzugehen.

Obwohl es sich bei den Oxidationsschutzmitteln bekanntermaßen um wasserunlösliche Verbindungen handelt, beeinträchtigen sie die Dispergierfähigkeit der erfindungsgemäßen Pigmentzubereitungen in wäßrigen Medien überraschenderweise nicht.

Als Beispiele für geeignete Oxidationsschutzmittel (C) seien die bekannten Klassen der sterisch gehinderten Phenole, der aromatischen Amine, der Thiosynergisten, der Phosphite und Phosphonite und der sterisch gehinderten Amine genannt.

Die Oxidationsschutzmittel auf Basis sterisch gehinderter Phenole enthalten als wesentlichen Baustein ein durch mindestens eine tert.-Butylgruppe in ortho-Position, insbesondere durch tert.-Butylgruppen in beiden ortho-Positionen, zur OH-Gruppe substituiertes Phenol. Die meisten bekannten Produkte enthalten mehrere dieser Bausteine, die über verschiedene Brückenglieder miteinander verbunden sind.

Bei den Oxidationsschutzmitteln auf Basis aromatischer Amine handelt es sich hauptsächlich um Diarylamine, Amin/Keton-Kondensationsprodukte, z.B. Anilin/Aceton-Kondensate und substituierte p-Phenylendiamine.

Beispiele für Thiosynergisten sind die Metallsalze von Dialkyldithiocarbaminsäuren, Zinkdialkyldithiophosphate und Ester (insbesondere Dilauryl-, Dimyristyl- und Distearylester) von Thiodipropionsäure.

Bei den Oxidationsschutzmitteln auf Basis von Phosphiten und Phosphoniten handelt es üblicherweise um die Ester der entsprechenden Phosphorsäuren mit alkylsubstituierten, insbesondere tert.-butylsubstituierten, Phenolen.

Die Oxidationsschutzmittel auf Basis von sterisch gehinderten Aminen (HALS) enthalten als wesentlichen Baustein ein 2,6-dialkylsubstituiertes, insbesondere ein -dimethylsubstituiertes, Piperidin, das in 4-Position über die verschiedensten Brückenglieder mit weiteren Piperidinbausteinen verknüpft ist.

Oxidationsschutzmittel sind allgemein bekannt und z.B. unter den Namen Irganox^{®}, Irgaphos^{®}, Chimassorb^{®} und Irgastab^{®} (Ciba), Topanol^{®} (ICI), Hostanox^{®} (Clariant) und Goodrite^{®} (Goodyear) erhältlich.

Die erfindungsgemäßen Pigmentzubereitungen enthalten 45 bis 90 Gew.-% der Komponente (A), 5 bis 50 Gew.-% der Komponente (B) und 0,1 bis 5 Gew.-% der Komponente (C).

Vorzugsweise enthalten die erfindungsgemäßen Pigmentzubereitungen 55 bis 90 Gew.-% der Komponente (A), 10 bis 45 Gew.-% der Komponente (B) und 0,1 bis 2 Gew.-% der Komponente (C), wobei die Summe der Komponenten (A), (B) und (C) 100 Gew.-% nicht überschreitet.

Die erfindungsgemäßen Pigmentzubereitungen können vorteilhaft nach dem ebenfalls erfindungsgemäßen Herstellungsverfahren erhalten werden, indem man das Pigment (A1) zunächst in wäßriger, das Oxidationsschutzmittel (C) und zumindest einen Teil des Additivs (B) enthaltender Suspension einer Naßzerkleinerung unterwirft, gewünschtenfalls einen Füllstoff (A2) vor oder nach der Naßzerkleinerung des Pigments (A1) der Suspension zusetzt und die Suspension dann, gegebenenfalls nach Zugabe der restlichen Menge Additiv (B), trocknet.

Das Pigment (A1) kann bei dem erfindungsgemäßen Verfahren als trockenes Pulver oder in Form eines Preßkuchens eingesetzt werden.

Bei dem eingesetzten Pigment (A1) handelt es sich vorzugsweise um ein gefinishtes Produkt, d.h. die Primärkorngröße des Pigments ist bereits auf den für die Anwendung gewünschten Wert eingestellt. Dieser Pigmentfinish empfiehlt sich insbesondere bei organischen Pigmenten, da die bei der Pigmentsynthese anfallende Rohware in der Regel nicht direkt für die Anwendung geeignet ist. Bei anorganischen Pigmenten, z.B. bei Oxid- und Bismutvanadatpigmenten, kann die Einstellung der Primärkorngröße auch bei der Pigmentsynthese erfolgen, so daß die anfallenden Pigmentsuspensionen direkt beim erfindungsgemäßen Verfahren eingesetzt werden können.

Da das gefinishte Pigment (A1) bei der Trocknung bzw. auf dem Filteraggregat üblicherweise wieder reagglomeriert, wird es in wäßriger Suspension einer Naßzerkleinerung, z.B. einer Mahlung in einer Rührwerkskugelmühle, unterzogen.

Bei der Naßzerkleinerung sollte zumindest ein Teil des in der fertigen Pigmentzubereitung enthaltenen Additivs (B) anwesend sein, vorzugsweise setzt man die gesamte Menge Additiv (B) vor der Naßzerkleinerung zu.

Um eine möglichst homogene Verteilung des Oxidationsschutzmittels (C) zu erreichen, wird dieses zweckmäßigerweise auch vor der Naßzerkleinerung zugegeben.

Kommt ein Füllstoff (A2) zum Einsatz, so kann er vor oder nach der Naßzerkleinerung zugesetzt werden. Wenn er bereits die gewünschte Korngrößenverteilung aufweist, wird er vorzugsweise erst nach der Naßzerkleinerung des Pigments (A1) in der Pigmentsuspension dispergiert. Dies gilt insbesondere für Füllstoffe mit einer geringen Härte, wie Kreide, die bei der Mahlung des Pigments unerwünscht mitzerkleinert würden. Umgekehrt kann die noch erforderliche Zerkleinerung eines zu grobteiligen Füllstoffs vorteilhaft mit der Zerkleinerung des Pigments kombiniert werden.

In Abhängigkeit von der gewählten Trocknungsart - Sprühgranulierung und Wirbelschichttrocknung, Sprühtrocknung, Trocknung im Schaufeltrockner, Eindampfen und anschließende Zerkleinerung - kann die Teilchengröße der erfindungsgemäßen Pigmentzubereitungen gezielt gesteuert werden.

Bei Sprüh- und Wirbelschichtgranulierung können grobteilige Granulate mit mittleren Korngrößen von 50 bis 5 000 µm, insbesondere 100 bis 1 000 µm, erhalten werden. Durch Sprühtrocknung werden üblicherweise Granulate mit mittleren Korngrößen < 20 µm erhalten. Feinteilige Zubereitungen können bei der Trocknung im Schaufeltrockner und beim Eindampfen mit anschließender Mahlung erhalten werden. Vorzugsweise liegen die erfindungsgemäßen Pigmentzubereitungen jedoch in Granulatform vor.

Die Sprühgranulierung führt man vorzugsweise in einem Sprühturm mit Einstoffdüse durch. Die Suspension wird hier in Form größerer Tropfen versprüht, wobei das Wasser verdampft. Die Additive schmelzen bei den Trocknungstemperaturen auf und führen so zur Bildung eines weitgehend kugelförmigen Granulats mit besonders glatter Oberfläche (BET-Werte von in der Regel ≤ 15 m²/g, insbesondere ≤ 10 m²/g).

Die Gaseintrittstemperatur im Sprühturm liegt im allgemeinen bei 180 bis 300°C, bevorzugt bei 150 bis 300°C. Die Gasaustrittstemperatur beträgt in der Regel 70 bis 150°C, vorzugsweise 70 bis 130°C.

Die Restfeuchte des erhaltenen Pigmentgranulats liegt bevorzugt bei < 5 Gew.-%.

Die erfindungsgemäßen Pigmentzubereitungen zeichnen sich bei der Anwendung in eine flüssige Phase aufweisende Anwendungsmedien durch ihre hervorragenden, den flüssigen Pigmentpräparationen vergleichbaren, koloristischen Eigenschaften, insbesondere ihre Farbstärke und Brillanz, ihren Farbton und ihr Deckvermögen, und vor allem durch ihr Stir-in-Verhalten aus, d.h. sie können mit sehr geringem Energieeintrag durch einfaches Einrühren oder Schütteln in den Anwendungsmedien verteilt werden. Dies gilt insbesondere für die grobteiligen Pigmentgranulate, die die bevorzugte Ausführungsform der erfindungsgemäßen Pigmentzubereitungen darstellen.

Im Vergleich zu flüssigen Pigmentpräparationen weisen die erfindungsgemäßen Pigmentzubereitungen zudem folgende Vorteile auf: Sie haben einen höheren Pigmentgehalt. Während flüssige Präparationen bei der Lagerung zu Viskositätsänderungen neigen und mit Konservierurigsmitteln und Mitteln zur Erhöhung der Gefrier- und/oder Eintrocknungsbeständigkeit versetzt werden müssen, zeigen die erfindungsgemäßen Pigmentzubereitungen sehr gute Lagerstabilität. Sie sind hinsichtlich Verpackung, Lagerung und Transport wirtschaftlich und ökologisch vorteilhaft. Da sie lösungsmittelfrei sind, weisen sie höhere Flexibilität in der Anwendung auf.

Die erfindungsgemäßen Pigmentzubereitungen in Granulatform zeichnen sich durch ausgezeichnete Abriebfestigkeit, geringe Kompaktierungs- bzw. Verklumpungsneigung, gleichmäßige Kornverteilung, gute Schütt-, Riesel- und Dosierfähigkeit sowie Staubfreiheit bei Handling und Applikation aus.

Die oben genannten vorteilhaften Eigenschaften teilen sie mit den bereits beschriebenen Pigmentzubereitungen mit Stir-in-Verhalten, die Pigmente und oberflächenaktive Additive, jedoch keine Füllstoffe enthalten. Gegenüber diesen Pigmentzubereitungen zeichnen sie sich zusätzlich dadurch aus, daß sie besonders gut an das geplante Anwendungsmedium angepaßt werden können, da die Kombination von Pigmenten und Additiven keinen Einschränkungen unterliegt. So können aufgrund der Anwesenheit des Füllstoffs z.B. auch hydrophobe Pigmente, wie Ruß, mit anionischen oberflächenaktiven Mitteln kombiniert und so vorteilhaft auch in wäßrigen Anwendungsmedien, z.B. Wasserbasislacken, eingesetzt werden. Außerdem können die erfindungsgemäßen Pigmentzubereitungen besonders leicht zur Nuancierung verwendet werden, da sie aufgrund des Verdünnungseffekts durch den Füllstoff besonders leicht zu dosieren sind. Schließlich enthalten sie die Füllstoffe in äußerst homogen verteilter Form und sind damit den üblichen Pigment/Füllstoff-Mischungen deutlich überlegen.

Die erfindungsgemäßen Pigmentzubereitungen eignen sich hervorragend zur Einfärbung von hochmolekularen organischen und anorganischen Materialien jeglicher Art. Flüssige Anwendungsmedien können dabei auch rein wäßrig sein, Mischungen von Wasser und organischen Lösungsmitteln, z.B. Alkoholen, enthalten oder nur auf organischen Lösungsmitteln, wie Alkoholen, Glykolethern, Ketonen, z.B. Methylethylketon, Amiden, z.B. N-Methylpyrrolidon und Dimethylformamid, Estern, z.B. Essigsäureethyl- und -butylester und Methoxypropylacetat, aromatischen oder aliphatischen Kohlenwasserstoffen, z.B. Xylol, Mineralöl und Benzin, basieren.

Gewünschtenfalls können die Zubereitungen zunächst in ein mit dem jeweiligen Anwendungsmedium verträgliches Lösungsmittel eingerührt werden, was wiederum mit sehr geringem Energieeintrag möglich ist, und dann in dieses Anwendungsmedium eingetragen werden. So können z.B. Aufschlämmungen von Pigmentzubereitungen in Glykolen oder sonstigen in der Lackindustrie üblichen Lösungsmitteln, wie Methoxypropylacetat, verwendet werden, um auf wäßrige Systeme abgestimmte Pigmentzubereitungen mit kohlenwasserstoffbasierenden Systemen oder Systemen auf Nitrocellulosebasis verträglich zu machen.

Als Beispiele für Materialien, die mit den erfindungsgemäßen Pigmentzubereitungen eingefärbt werden können, seien genannt: Lacke, z.B. Bautenlacke, Industrielacke, Fahrzeuglacke, strahlungshärtbare Lacke; Anstrichmittel, sowohl für den Bautenaußenals auch -innenbereich, z.B. Holzanstrichmittel, Kalkfarben, Leimfarben, Dispersionsfarben; Druckfarben, z.B. Offsetdruckfarben, Flexodruckfarben, Toluoltiefdruckfarben, Textildruckfarben, strahlungshärtbare Druckfarben; Tinten, auch Ink-Jet-Tinten; Colorfilter; Baustoffe (üblicherweise wird erst nach trockenem Vermischen von Baustoff und Pigmentgranulat Wasser zugesetzt), z.B. Silikatputzsysteme, Zement, Beton, Mörtel, Gips; Asphalt, Dichtungsmassen; cellulosehaltige Materialien, z.B. Papier, Pappe, Karton, Holz und Holzwerkstoffe, die lackiert oder anderweitig beschichtet sein können; Klebstoffe; filmbildende polymere Schutzkolloide, wie sie beispielsweise in der Pharmaindustrie verwendet werden; kosmetische Artikel; Detergentien.

Die erfindungsgemäßen Pigmentzubereitungen sind auch hervorragend zur Einfärbung von Kunststoffen geeignet. Beispielhaft seien hier folgende Kunststoffklassen und Kunststofftypen genannt:
- abgewandelte Naturstoffe:
   Duroplaste, z.B. Casein-Kunststoffe; Thermoplaste, z.B. Cellulosenitrat, Celluloseacetat, Cellulosemischester und Celluloseether;
- synthetische Kunststoffe:
   Polykondensate: Duroplaste, z.B. Phenolharz, Harnstoffharz, Thioharnstoffharz, Melaminharz, ungesättigtes Polyesterharz, Allylharz, Silicon, Polyimid und Polybenzimidazol; Thermoplaste, z.B. Polyamid, Polycarbonat, Polyester, Polyphenylenoxid, Polysulfon und Polyvinylacetal;
   Polymerisate: Thermoplaste, z.B. Polyolefine, wie Polyethylen, Polypropylen, Poly-1-buten und Poly-4-methyl-1-penten, lonomere, Polyvinylchlorid, Polyvinylidenchlorid, Polymethylmethacrylat, Polyacrylnitril, Polystyrol, Polyacetal, Fluorkunststoffe, Polyvinylalkohol, Polyvinylacetat und Poly-p-xylylen sowie Copolymere, wie Ethylen/Vinylacetat-Copolymere, Styrol/Acrylnitril-Copolymere, Acrylnitril/Butadien/Styrol-Copolymere, Polyethylenglykolterephthalat und Polybutylenglykolterephthalat;
   Polyaddukte: Duroplaste, z.B. Epoxidharz und vernetzte Polyurethane; Thermoplaste, z.B. lineare Polyurethane und chlorierte Polyether.

Die Kunststoffe können vorteilhaft unter geringem Energieeintrag, z.B. durch gemeinsames Extrudieren (vorzugsweise mit einem Ein- oder Zweischneckenextruder), Walzen, Kneten oder Mahlen, mit den erfindungsgemäßen Pigmentzubereitungen eingefärbt werden. Sie können dabei als plastische Massen oder Schmelzen vorliegen und zu Kunststofformkörpern, Folien und Fasern verarbeitet werden.

Die erfindungsgemäßen Pigmentzubereitungen zeichnen sich auch bei der Kunststoffeinfärbung durch insgesamt vorteilhafte Anwendungseigenschaften, vor allem gute koloristische Eigenschaften, insbesondere hohe Farbstärke und Brillanz, und die guten rheologischen Eigenschaften der mit ihnen eingefärbten Kunststoffe, insbesondere niedrige Druckfilterwerte (hohe Filterstandszeiten) und gute Verspinnbarkeit, aus.

### Beispiele

### Herstellung und Prüfung von erfindungsgemäßen Pigmentzubereitungen

Die Herstellung der Pigmentzubereitungen erfolgte, indem eine Suspension von x g gefinishtem Pigment (A1), y g Additiv (B1) und z g Oxidationsschutzmittel (C) in 150 g Wasser (bei pH-Werten < 7 durch Zugabe von 25 gew.-%iger Natronlauge auf einen pH-Wert von 7 eingestellt) in einer Kugelmühle auf einen dso-Wert von < 1 µm gemahlen und dann bei 60°C im Umlufttrockenschrank getrocknet wurde.

Zur Untersuchung des Verhaltens der erfindungsgemäßen Pigmentzubereitungen bei der Trocknung wurde ihre Onset-Temperatur bestimmt.

Die Onset-Temperatur ist die Heiztemperatur, bei der die Temperatur einer Substanz während eines Aufheizvorgangs im Luftstrom die Temperatur einer in demselben Luftstrom erhitzten inerten Referenzsubstanz überschreitet. Zur Sicherstellung einer sicheren Trocknung in der Produktion (keine Selbstentzündung) sollte die Trocknungstemperatur etwa 50°C unter der Onset-Temperatur liegen.

Zur Bestimmung der Onset-Temperatur wurde eine 10 cm³-Probe der jeweiligen Pigmentzubereitung und von Graphit als Referenzprobe mit einer Aufheizgeschwindigkeit von 1 °C/min in einem Luftstrom von 2 I/min unter Kontrolle der Temperatur beider Proben erhitzt.

Außerdem wurden die erfindungsgemäßen Pigmentzubereitungen einer koloristischen Prüfung unterzogen. Hierbei zeigten sie den jeweils analogen handelsüblichen wäßrigen Präparationen vergleichbare Farbstärken.

In der folgenden Tabelle sind die Zusammensetzungen der hergestellten Pigmentzubereitungen sowie die jeweils ermittelten Onset-Temperaturen aufgeführt. Zum Vergleich sind die Onset-Temperaturen der jeweiligen, kein Oxidationsschutzmittel enthaltenden Pigmentzubereitungen genannt. Als Additiv (B1) und Oxidationsschutzmittel (C) wurden dabei eingesetzt:
- (B1):: PO/EO-Blockcopolymer mit zentralem PO-Block (EO-Gehalt: 50 Gew.-%; Mₙ: 6 500)
- (C1):: Irganox^{®} 1010 (Ciba) (Tetrakis[methylene(3,5-di(tert.-butyl)-4-hydroxyhydrocinnamate)]methane)
- (C2):: Irganox 1076 (Ciba) (Octadecyl-3,5-di-(tert.-butyl)-4-hydroxyhydroycinnamate)
- (C3):: Irgafos^{®} 168 (Ciba) (Tris[2,4-di(tert.-butylphenyl)phosphit)

**Tabelle**

| Bsp | Pigment | | Additiv (B1) yg | Oxidationsschutzmittel | | Onset-Temp. [°C] |
|---|---|---|---|---|---|---|
| | xg | (A1) | | zg | (C) | |
| 1* | 84 | Yellow 42 (opak) | 15 | 1 | (C1) | 194 |
| V1 | 85 | Yellow 42 (opak) | 15 | - | - | 125 |
| 2** | 58 | Yellow 42 (transp.) | 40 | 2 | (C1) | 185 |
| V2 | 60 | Yellow 42 (transp.) | 40 | - | - | 110 |
| 3*** | 79 | Red 101 (opak) | 20 | 1 | (C1) | 205 |
| V3 | 80 | Red 101 (opak) | 20 | - | - | 94 |
| 4 | 79 | Yellow 184 | 20 | 1 | (C1) | 294 |
| V4 | 80 | Yellow 184 | 20 | - | - | 160 |
| 5 | 79 | Black 11 | 20 | 1 | (C1) | 188 |
| 6 | 79 | Black 11 | 20 | 1 | (C2) | 178 |
| 7 | 79 | Black 11 | 20 | 0,5 0,5 | (C1) (C3) | 178 |
| 8 | 79 | Black 11 | 20 | 0,5 0,5 | (C1) (C2) | 180 |
| V5 | 80 | Black 11 | 20 | - | - | 150 |

| | | | | | | |
|---|---|---|---|---|---|---|
| * BET-Oberfläche 13 m²/g (Bayferrox^{®} Gelb 920 (Lanxess)) ** BET-Oberfläche 90 m²/g (Sicotrans^{®} Gelb 1916 (BASF)) *** BET-Oberfläche 6 m²/g (Bayferrox Rot 130 (Lanxess)) | | | | | | |

## Patentansprüche

1. Feste Pigmentzubereitungen, enthaltend als wesentliche Bestandteile
(A) 45 bis 90 Gew.-% mindestens einer farbgebenden Komponente, die
(A1) 5 bis 100 Gew.-% mindestens eines anorganischen Pigments und
(A2) 0 bis 95 Gew.-% mindestens eines keine Eigenfarbe aufweisenden Füllstoffs enthält,
(B) 5 bis 50 Gew.-% mindestens eines wasserlöslichen oberflächenaktiven Additivs aus der Gruppe der alkylenoxidgruppenhaltigen Additive (B1) und der alkylenoxidgruppenfreien Additive (B2), wobei der Anteil des alkylen-oxidgruppenhaltigen Additivs (B1) an den Pigmentzubereitungen mindestens 5 Gew.-% beträgt, und
(C) 0,1 bis 5 Gew.-% eines Oxidationsschutzmittels.

2. Pigmentzubereitungen nach Anspruch 1, die als Komponente (A1) ein anorganisches Pigment auf Basis von Eisenoxiden enthalten.

3. Pigmentzubereitungen nach den Ansprüchen 1 bis 2, die als Komponente (B1) mindestens ein wasserlösliches oberflächenaktives Additiv aus der Gruppe der nichtionischen Additive auf Basis von Polyethern (b11), der anionischen Additive auf Basis von sauren Phosphorsäure-, Phosphonsäure-, Schwefelsäure- und/oder Sulfonsäureestern der Polyether (B12) und der anionischen Additive auf Basis von alkoxylierten Polymerisaten ethylenisch ungesättigter Carbonsäuren (B13), enthalten.

4. Pigmentzubereitungen nach den Ansprüchen 1 bis 3, die als Komponente (B2) mindestens ein wasserlösliches oberflächenaktives Additiv aus der Gruppe der anionischen Additive auf Basis von nicht mit Alkylenoxiden umgesetzten Polymerisaten ethylenisch ungesättigter Carbonsäuren (B21) und von Polyurethanen (B22) enthalten.

5. Pigmentzubereitungen nach den Ansprüchen 1 bis 4, die als Komponente (C) mindestens ein Oxidationsschutzmittel aus der Gruppe der sterisch gehinderten Phenole, der aromatischen Amine, der Thiosynergisten, der Phosphite und Phosphonite und der sterisch gehinderten Amine enthalten.

6. Verfahren zur Herstellung von Pigmentzubereitungen gemäß den Ansprüchen 1 bis 5, **dadurch gekennzeichnet, daß** man das Pigment (A1) zunächst in wäßriger, das Oxidationsschutzmittel (C) und zumindest einen Teil des Additivs (B) enthaltender Suspension einer Naßzerkleinerung unterwirft, gewünschtenfalls einen Füllstoff (A2) vor oder nach der Naßzerkleinerung des Pigments (A1) der Suspension zusetzt und die Suspension dann, gegebenenfalls nach Zugabe der restlichen Menge Additiv (B), trocknet.

7. Verfahren zur Einfärbung von hochmolekularen organischen und anorganischen Materialen, **dadurch gekennzeichnet, daß** man Pigmentzubereitungen gemäß den Ansprüchen 1 bis 5 durch Einrühren oder Schütteln in diese Materialien einträgt.

8. Verfahren nach Anspruch 7, **dadurch gekennzeichnet, daß** man Lacke, Anstrichmittel, Druckfarben, Tinten und Beschichtungssysteme einfärbt, die als flüssige Phase Wasser, organische Lösungsmittel oder Mischungen von Wasser und organischen Lösungsmitteln enthalten.

9. Verfahren zur Einfärbung von Kunststoffen, **dadurch gekennzeichnet, daß** man Pigmentzubereitungen gemäß den Ansprüchen 1 bis 5 durch Extrudieren. Walzen, Kneten oder Mahlen in die Kunststoffe einarbeitet.

## Claims

1. A solid pigment preparation comprising as essential constituents
(A) 45% to 90% by weight of at least one color-conferring component comprising
(A1) 5% to 100% by weight of at least one inorganic pigment and
(A2) 0% to 95% by weight of at least one filler without self color,
(B) 5% to 50% by weight of at least one water-soluble surface-active addictive from the group of alkylene oxide group containing additive (B1) and alkylene oxide group free additives (B2), the alkylene oxyde group containing addictive (B1) comprising at least 5% by weight of the pigment preparation, and
(C) 0.1% to 5% by weight of an antioxidant.

2. The pigment preparation according to claim 1 wherein said component (A1) comprises an inorganic pigment based on an iron oxide.

3. The pigment preparation according to claims 1 and 2 wherein said component (B1) comprises at least one water-soluble surface-active addictive from the group of nonionic additive based on polyethers (B11), anionic additive based on acidic phosphoric, phosphonic, sulfuric and/or sulfonic esters of polyethers (B12) and anionic additive based on alkoxylated polymers of ethylenically unsaturated carboxylic acids (B13).

4. The pigment preparation according to claims 1 to 3 wherein said component (B2) comprises at least one water-soluble surface-active additive from the group of anionic additives based on nonalkoxylated polymers of ethylenically unsaturated carboxylic acids (B21) and on polyurethane (B22).

5. The pigment preparation according to claim 1 to 4 wherein said component (C) comprises at least one antioxidant from the group of sterically hindered phenols, aromatic amines, thiosynergists, phosphites, phosphonites and sterically hindered amines.

6. A process for producing a pigment preparation according to claims 1 to 5, which comprises first wet-comminuting said pigment (A1) in aqueous suspension comprising said antioxidant (C) and some or all of said additive (B), if desired adding a filler (A2) to said suspension before or after said wet-comminuting of said pigment (A1) and then drying said suspension, if appropriate after the rest of said addictive (B) has been added.

7. A process for coloration of macromolecular organic or inorganic material, which comprises incorporating a pigment preparation according to claims 1 to 5 in said material by stirring or shaking.

8. The process according to claim 7 for coloration of coatings, paints, inks, including printing inks, and finish systems where the liquid phase comprises water, organic solvents or mixtures of water and organic solvents.

9. A process for coloration of a plastics material, which comprises incorporating a pigment preparation according to claims 1 to 5 in said plastics material by extruding, rolling, kneading or milling.

## Revendications

1. Préparations de pigments solides, contenant comme composants essentiels
(A) 45 à 90 % en poids d'au moins un composant colorant qui contient
(A1) 5 à 100 % en poins d'au moins un pigment inorganique et
(A2) 0 à 95 % en poins d'au moins une charge n'ayant aucune couleur propre,
(B) 5 à 50 % en poids d'au moins un additif tensioactif hydrosoluble choisi dans le groupe des additifs (B1) contentant des groupes oxyde d'alkylène et des additifs (B2) exempts de groupes oxyde d'alkylène, la proportion de l'additif (B1) contenant des groupes oxyde d'alkylène par rapport aux préparations de pigments étant d'au moins 5 % en poids, et
(C) 0,1 à 5 % en poids d'un antioxydant.

2. Préparations de pigments selon la revendication 1, qui contiennent en tant que composant (A1) un pigment inorganique à base d'oxydes de fer.

3. Préparations de pigments selon les revendications 1 et 2, qui contiennent en tant que composant (B1) au moins un auditif tensioactif hydrosoluble choisi dans le groupe des additifs non ioniques à base de polyéthers (B11), des additifs anioniques à base d'esters acides d'acide phosphorique, d'acide phosphonique, d'acide sulfurique et/ou d'acide sulfonique des polyéthers (B12) et des additifs anioniques à base de polymérisats alcoxylés d'acides carboxyliques à insaturation éthylénique (B13).

4. Préparation de pigments selon les revendications 1 à 3, qui contiennent en tant que composant (B2) au moins un additif tensioactif hydrosoluble choisi dans le groupe des additifs anioniques à base de polymérisats d'acides carboxyliques à insaturation éthylénique, n'ayant pas réagi avec des oxydes d'alkylène, (B21), et de polyuréthannes (B22).

5. Préparations de pigments selon les revendications 1 à 4, qui contiennent en tant que composant (C) au moins un antioxydant choisi dans le groupe des phénols à empêchement stérique, des amines aromatiques, des agents synergiques thio, des phosphates et phosphonites et des amines à empêchement stérique.

6. Procédé pour la production de préparations de pigments selon les revendications 1 à 5, **caractérisé en ce que** d'abord on soumet à une fragmentation par voie humide le pigment (A1) en suspension aqueuse contenant l'antioxydant (C) et au moins une partie de l'additif (B), si on le désire on ajoute à la suspension une charge (A2) avant ou après la fragmentation par voie humide du pigment (A1) et ensuite on sèche la suspension, éventuellement après addiction de la quantité restante d'additif (B).

7. Procédé pour la coloration de matériaux inorganiques et organiques de masse moléculaire élevée, **caractérisé en ce qu'**on introduit dans ces matériaux, par déblayage ou secouement, des préparations de pigments selon les revendications 1 à 5.

8. Procédé selon la revendication 7, **caractérisé en ce qu'**on colore des peintures, des enduits, des encres d'imprimerie, des encres et des systèmes de revêtement, qui contiennent en tant que phase liquide de l'eau, des solvants organiques ou des mélanges d'eau et de solvants organiques.

9. Procédé pour la coloration de matières plastiqués, **caractérisé en ce qu'**on incorpore dans les matières plastiques des préparations de pigments selon les revendications 1 à 5, par extrusion, laminage, malaxage ou broyage.
